# EUROPEAN PATENT APPLICATION

(11) **EP 0 808 745 A1**
(43) Date of publication of application: **26.11.1997**
(21) Application number: 97830148.9
(22) Date of filing: 28.03.1997
(51) Int. Cl.: B60N 2/36, B60N 2/44, B60R 22/26

(54) **Motor-vehicle rear seat**

(30) Priority: 20.05.1996 IT TO960416
(71) Applicant: LEAR CORPORATION ITALIA S.p.A., 10128 Torino (IT)
(72) Inventor: Bouhours, Daniel, 10128 Torino (IT)
(74) Representative: Notaro, Giancarlo

(57) **Abstract**

A motor-vehicle rear seat for three persons, including two backrest sections (2,3) which are both pivotally mounted around a transverse axis (4) on the motor-vehicle body, has a winding device (14) for the safety belt (9) of the central passenger which is mounted directly on the structure of the wider backrest section (2). The latter has two lower brackets (18,19) for articulation to the body. The bracket (19) located on the side facing towards the other backrest section (3) is positioned substantially at, or adjacent to a longitudinal vertical plane containing the point at which said winding device (14) is located.

## Description

The present invention relates to motor-vehicle rear seats, and in particular rear seats for three persons having a backrest including two separate sections, with different transverse dimensions, which are both pivotally mounted around a common axis, directed transversally with respect to the longitudinal direction of the motor-vehicle, on the body of the latter, with the wider backrest section which has two brackets for articulation on the body, of which a first bracket is adjacent to one side of the wider backrest section which is remote with respect to the other backrest section, and a second bracket being spaced apart from said first bracket along the articulation axis.

In the seats of the above indicated type, there has been proposed to provide a winding device also for the safety belt of the central passenger, this winding device being mounted at the upper edge of said wider backrest section, at a position intermediate between the two sides of this section.

In the conventional solutions, said two brackets for articulation to the body which are provided on the wider backrest section are arranged respectively at the two sides of said backrest section. This arrangement is not entirely satisfactorily, since the articulation bracket of said backrest section which is arranged at the side thereof which is adjacent to the other backrest section is subjected to high stress when a high load is applied to the safety belt of the central passenger, since the articulation bracket which is arranged on the side of the wider backrest section which is adjacent to the other backrest section is located at a relatively long distance with respect to a vertical plane parallel to the longitudinal direction of the motor-vehicle and containing the point at which the winding device for the central passenger safety belt is located.

The object of the present invention is that of solving this problem.

In view of achieving this object, the invention provides a rear seat of the above indicated type, characterized in that said wider backrest section directly supports a winding device for the central passenger safety belt which is arranged at the upper edge of said backrest section, at a position intermediate between the sides thereof, and in that said second bracket is arranged at, or adjacent to a vertical theoretical plane parallel to the longitudinal direction of the motor-vehicle and containing the point at which said winding device is arranged.

Due to said feature, even a high load applied to the safety belt of the central passenger does not subject said second articulation bracket to particularly high stresses.

Further features and advantages of the invention will become apparent from the description which follows with reference to the annexed drawings, given purely by way of non-limiting example, in which:
figure 1 is a front diagrammatic view of a rear seat of a motor-vehicle according to the invention, and
figure 2 is an exploded perspective view, at an enlarged scale, of the seat of figure 1.

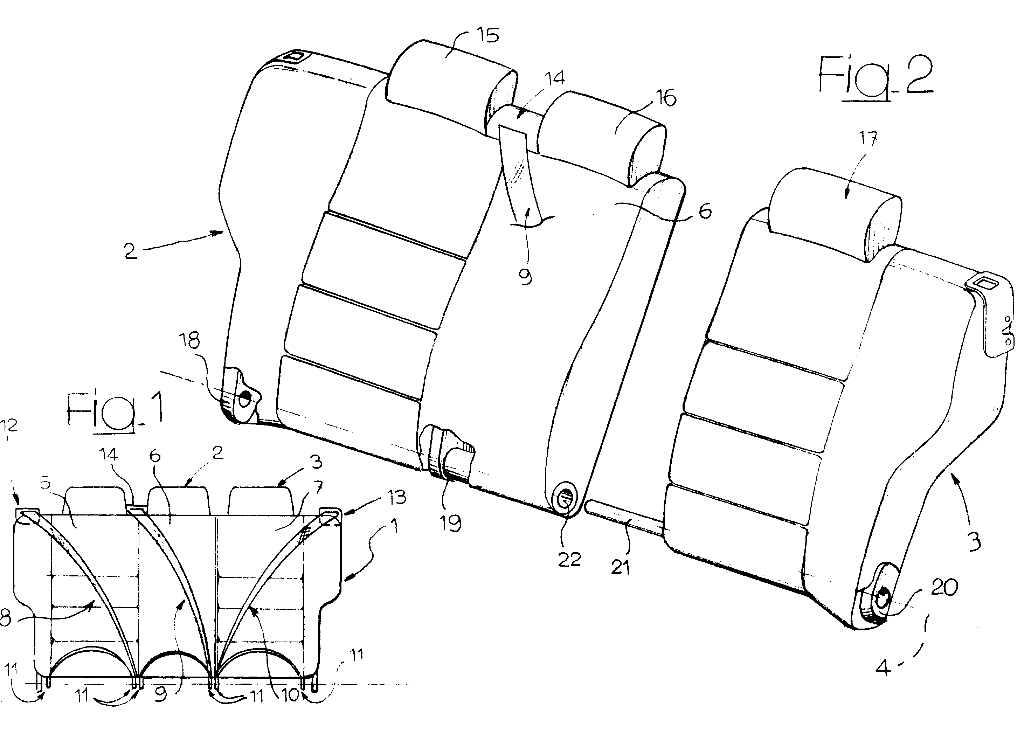

In figure 1, reference numeral 1 generally designates a backrest of a motor-vehicle rear seat, comprising two backrest sections 2,3 separated from each other, both pivotally mounted around a common transverse axis 4, which is directed orthogonally to the longitudinal vertical plane of the motor-vehicle. The two backrest sections 2,3 have different dimensions along the direction parallel to axis 4. The wider backrest section 2 includes the right place 5 and the central place 6 of the seat, whereas the narrower backrest section, designated by 3, includes the left place of the seat, designated by 7. With the three places 5,6,7 there are associated three safety belts 8,9,10, having lower brackets 11 fixed to the body of the motor-vehicle and having three winding devices 12, 13 and 14 at the upper edge of backrest 1.

The winding devices 12,13 of safety belts 8,10 of the two lateral passengers, are fixed directly to the motor-vehicle body, whereas the winding device 14 associated with the safety belt 9 of the central place 6 (see also figure 2), is directly supported by the structure of the wider backrest section 2, at the upper edge of said backrest section and at a position intermediate between the sides thereof. In particular, in the illustrated example, the winding device 14 is interposed between two headrests 15,16 associated with the right place and the central place, a headrest 17 for the left passenger being associated with the backrest section 3.

The wider backrest section 2 is provided at its lower part with two brackets 18,19 for articulation to the motor-vehicle body around axis 4. The bracket 18 is located at the right side of the backrest section 2, whereas, according to a main feature of the invention, the bracket 19 is located, rather than adjacent to the left side of the backrest section 2, at a position intermediate between the two sides of the backrest section 2 and substantially at, or adjacent to, the longitudinal vertical plane containing the point at which the winding device 14 is located.

Due to this arrangement, the bracket 19 is located at no or minimum distance with respect to said plane, which decreases the stresses to which this bracket is subjected due to the loads applied to safety belt 9.

The other backrest section 3 has at its left side a bracket 20 for articulation around axis 4, and at its right side a shaft 21, directed along axis 4, rigidly connected to the structure of the backrest section 3 and adapted to be rotatably received within a coaxial bush 22 carried by the structure of the backrest section 2.

Due to said arrangement, the two backrest sections are rotatable independently from each other around said axis 4, with respect to the motor-vehicle body, so that they can be rotated together or separately, forwardly, in order to enlarge the floor of the luggage compartment of the motor-vehicle.

Naturally, while the principle of the invention remains the same, the details of construction and the embodiments may widely vary with respect to what has been described and illustrated purely by way of example, without departing from the scope of the present invention.

## Claims

1. Motor-vehicle rear seat, for three persons, with a backrest (1) including two separate sections (2,3), having different transverse dimensions, said section being both pivotally mounted around a common axis (4), which is directed transversally to the longitudinal direction of the motor-vehicle, on the body of the latter, with the wider backrest section (2) which has two brackets (18,19) for articulation to the motor-vehicle body, of which a first bracket (18) is located adjacent to the side of this backrest section (2) which is remote with respect to the other backrest section (3), and the second bracket (19) being spaced apart from said first bracket (18) along said axis (4), characterized in that said wider backrest section (2) directly supports a winding device (14) for a safety belt (9) of the central passenger, arranged at the upper edge of said wider backrest section (2), at a position intermediate between the two sides thereof, said second bracket (19) being located substantially at, or adjacent to a vertical longitudinal plane containing the point at which said winding device (14) is located.

2. Rear seat according to claim 2, characterized in that the narrower backrest section has a bracket (20) on its side which is remote with respect to the other backrest section (2), for articulation to the motor-vehicle body and, on the opposite side, a shaft (21) directed along said articulation axis (4) and rotatably received within a coaxial bush (22) carried by the structure of the other backrest section (2).
